Europäisches Patentamt

European Patent Office

Office européen des brevets

(19)

(11) Numéro de publication: **0 238 423**
**B1**

(12)

# FASCICULE DE BREVET EUROPEEN

(45) Date de publication du fascicule du brevet:
07.02.90

(51) Int. Cl.⁴: **D02G 3/12**, D04H 1/42,
F16J 15/22, A41D 31/00,
A62B 17/00

(21) Numéro de dépôt: 87420062.9

(22) Date de dépôt: 04.03.87

(54) **Matière fibreuse résistant à l'action combinée de la chaleur et de la pression.**

(30) Priorité: 11.03.86 FR 8603858

(43) Date de publication de la demande:
23.09.87 Bulletin 87/39

(45) Mention de la délivrance du brevet:
07.02.90 Bulletin 90/6

(84) Etats contractants désignés:
AT BE CH DE ES GB GR IT LI LU NL SE

(56) Documents cités:
FR-A- 2 313 611
FR-A- 2 390 117
US-A- 4 502 364

TEXTILE RESEARCH JOURNAL,
vol. 52, no. 7, juillet 1982, pages 466-472, Textile
Research Institute, Princeton, New Jersey, US; D.R.
COFFIN et al.: "Properties and applications of celanese
PBI - polybenzimidazole fiber"

(73) Titulaire: "S.A. SCHAPPE" Société Anonyme dite:,
F-01230 Saint Rambert en Bugey(FR)

(72) Inventeur: Guevel, Jean, La Perrinche, F-01440 Viriat(FR)
Inventeur: Francois, Marc, 3 route de Champagne,
F-69130 Ecully(FR)
Inventeur: Bontemps, Guy, 76 rue Centrale,
F-01970 Tenay(FR)

(74) Mandataire: Maureau, Philippe et al, Cabinet Germain &
Maureau Le Britannia - Tour C 20, bld Eugène Déruelle,
F-69003 Lyon(FR)

## Description

La présente invention concerne une matière fibreuse résistant à l'action combinée de la chaleur et de la pression.

Il existe actuellement une demande importante dans le domaine industriel pour des fibres techniques susceptibles de résister à la fois à des température élevées, de l'ordre de 450°C, et à l'action des produits chimiques agressifs.

Certaines utilisations, notamment dans le domaine des garnitures d'étanchéité, imposent également de disposer d'éléments résistant à des pressions élevées, de l'ordre de 400 bars.

A l'heure actuelle, ces garnitures · d'étanchéité sont le plus souvent réalisées à partir d'éléments moulés en graphite expansé, mais il s'agit là d'une solution onéreuse; on a aussi réalisé des garnitures d'étanchéité en fibres d'amiante, ce qui entraîne des problèmes de pollution atmosphérique.

Le document TEXTILE RESEARCH JOURNAL, vol. 52, n° 7, juillet 1982, pages 466–472, Textile Research Institute, Princeton, New-Jersey, US; D.R. COEFFIN et al.: "Properties and applications of celanse PBI - polybenzimidazole fiber" * Page 468, "Thermal stability", page 470, "Applications" * décrit les propriétés de la fibre PBI d'un point de vue chimique, physique, et en ce qui concerne la thermogravimétrie et la fabrication et la constitution de la molécule de base.

L'accent est mis sur le remplacement de l'amiante, et les opportunités qu'offre la fibre PBI comme substitut dans ce marché: bandes transporteuses, vêtements, matériaux composites....

La présente invention s'est donné pour object de fournir une nouvelle matière fibreuse capable de résister à des contraintes élevées de pression et de température, ainsi qu'à l'action corrosive de nombreux produits chimiques.

La matière fibreuse selon l'invention est caractérisée en ce qu'elle contient un mélange intime de fibres de polybenzimidazole et de fibres d'alliage métallique à base de nickel.

On utilise, de préférence, les fibres obtenues par craquage de fils produits par tréfilage de l'alliage métallique à base de nickel comercialisé sous la marque Inconel par la Société International Nickel.

Selon un mode de réalisation préféré de l'invention, la matière fibreuse contient environ 70 % de fibres de polybenzimidazole pour environ 30 % de fibres d'alliage à base de nickel.

Une certaine quantité de fibres de polyamide aromatique aramide à haut module est avantageusement ajoutée au mélange selon l'invention, afin d'en améliorer les propriétés mécaniques. Cette quantité se situe entre 15 % et 50 % en poids calculée par rapport au poids total du mélange.

La fibre polybenzimidazole est avantageusement obtenue par craquage de filaments à une hauteur moyenne de fibres de 110 mm. La fibre d'alliage de nickel est également obtenue par craquage de fils tréfilés à une hauteur moyenne de 120 mm, le mélange intime étant rálisé sur un matériel de filature pour fibres longues.

Cette transformation des filaments continus s'effectue selon un procédé de craquage par étirage et rupture contrôlée; elle est effectuée sur des câbles de multifilaments de fibres unitaires, dont le titre se situe entre 0,8 et 6 dtex, comme mentionné ci-avant. On obtient ainsi des fibres longues, ce qui permet de filer une très large gammme de titres entre 1/1 (10000tex) et 200/1 (5tex).

On effectue ensuite les opérations complémentaires de finition, telles que le retordage ou le câblage.

L'alliage à base de nickel, matériau réfractaire de très grande inertie chimique, n'avait jamais, jusqu'à présent, pu être utilisé dans le domaine textile, et c'est sa transformation en fibres par le procédé craquage/étirage qui permet son utilisation dans la matière fibreuse selon l'invention dans des proportions élevés tout à fait surprenantes.

La matière fibreuse ainsi obtenue trouve de nombreuses applications.

C'est ainsi que, sous la forme de fils tressés et cardés, elle peut être utilisée comme presse-étoupe, dans des garnitures d'étanchéité pouvant supporter des pressions jusqu'à 400 bars et des températures jusqu'à 450°C.

Elle trouve également des emplois intéressants dans le domaine des vêtements de protection contre la chaleur et les produits chimiques.

Elle peut aussi être utilisée, sous forme de grilles tissées, comme écrans de protection, souples ou rigides contre les flux thermiques, en renfort de matrices.

## Revendications

1. Matière fibreuse, caractérisée en ce qu'elle contient un mélange intime de fibres de polybenzimidazole et de fibres d'alliage métallique à base de nickel.

2. Matière fibreuse selon la revendication 1, caractérisée en ce qu'elle contient environ 70% de fibres de polybenzimidazole pour environ 30 % de fibres d'alliage à base de nickel.

3. Matière fibreuse selon l'une quelconque des revendications 1 et 2, caractérisée en ce qu'elle contient en outre des fibres de polyamide aromatique à haut module, dans des proportions se situant entre 15 % et 50 % en poids calculées par rapport au poids total du mélange.

4. Matière fibreuse selon l'une des revendications 1 à 3, caractérisée en ce que la fibre polybenzimidazole est obtenue par craquage de filaments à une hauteur moyenne de fibres de 110 mm et en ce que la fibre d'alliage de nickel est obtenue par craquage de fils tréfilés à une hauteur moyenne de 120 mm.

5. Matière fibreuse selon l'une des revendications 1 à 4, caractérisée en ce que le mélange intime est réalisé sur un matériau de filature pour fibres ongues.

6. Application de la matière fibreuse selon l'une quelconque des revendications 1 à 5 à la réalisation de garnitures d'étanchéité.

7. Application de la matière fibreuse selon l'une quelconque des revendications 1 à 5 à la réalisation de vêtements de protection.

8. Application de la matière fibreuse selon l'une quelconque des revendications 1 à 5 à la réalisation d'écrans de protection.

## Patentansprüche

1. Faseriges Material, dadurch gekennzeichnet, daß es eine innige Mischung aus Polybenzimidazol-Fasern und Metallegierungs-Fasern auf der Basis von Nickel enthält.

2. Faseriges Material nach Anspruch 1, dadurch gekennzeichnet, daß es ca. 70 % Polybenzimidazol-Fasern und ca. 30 % Metallegierungs-Fasern auf der Basis von Nickel enthält.

3. Faseriges Material nach einem der Ansprüche 1 und 2, dadurch gekennzeichnet, daß es außerdem aromatische Polyamidfasern mit hohem Modul in Anteilen zwischen 15 und 50 Gew.-%, bezogen auf das Gesamtgewicht der Mischung, enthält.

4. Faseriges Material nach einem der Ansprüche 1 bis 3, dadurch gekennzeichnet, daß die Polybenzimidazol-Faser erhalten wurde durch Spalten von Filamenten in Fasern einer mittleren Länge von 110 mm und dadurch, daß die Nickellegierungsfaser erhalten wurde durch Spalten von gezogenen Drähten in eine mittlere Länge von 120 mm.

5. Faseriges Material nach einem der Ansprüche 1 bis 4, dadurch gekennzeichnet, daß die innige Mischung auf einer Spinnmaschine für lange Fasern hergestellt wird.

6. Verwendung des faserigen Materials nach einem der Ansprüche 1 bis 5 zur Herstellung von Dichtungen.

7. Verwendung des faserigen Materials nach einem der Ansprüche 1 bis 5 zur Herstellung von Schutzanzügen.

8. Verwendung des faserigen Materials nach einem der Ansprüche 1 bis 5 zur Herstellung von Schutzschirmen.

## Claims

1. A fibrous material, characterized in that it contains an intimate mixture of fibres of polybenzimidazole and fibres of a nickel-based metallic alloy.

2. A fibrous material according to Claim 1, characterized in that it contains about 70 % of fibres of polybenzimidazole with about 30 % of fibres of nickel-based alloy.

3. A fibrous material according to either of Claims 1 and 2, characterized in that it additionally contains fibres of aromatic polyamide of high modulus of elasticity in proportions varying between 15 % and 50 % by weight relatively to the total weight of the mixture.

4. A fibrous material according to one of Claims 1 to 3, characterized in that the polybenzimidazole fibre is obtained by cracking filaments to a mean fibre length of 110 mm and in that the nickel alloy fibre is obtained by cracking drawn wires to a mean length of 120 mm.

5. A fibrous material according to one of Claims 1 to 4, characterized in that the intimate mixture is obtained on spinning equipment for long fibres.

6. Application of the fibrous material according to any of Claims 1 to 5 to the production of impervious packings.

7. Application of the fibrous material according to any of Claims 1 to 5 to the production of protective clothing.

8. Application of the fibrous material according to any of Claims 1 to 5 to the production of protective screens.